# NEUE EUROPÄISCHE PATENTSCHRIFT

(11) **EP 0 314 672 B2**
(45) Veröffentlichungstag und Bekanntmachung des Hinweises auf die Entscheidung über den Einspruch: **29.07.1998**
(45) Hinweis auf die Patenterteilung: 29.07.1992
(21) Anmeldenummer: 87902380.2
(22) Anmeldetag: 07.04.1987
(51) Int. Cl.: G02F 1/133

(54) **ANZEIGEGERÄT MIT FLÜSSIGKRISTALLZELLE, VORZUGSWEISE FÜR KRAFTFAHRZEUGE**
DISPLAY APPARATUS WITH LIQUID CRYSTAL CELLS, PREFERABLY FOR MOTOR VEHICLES
APPAREIL D'AFFICHAGE A CELLULES A CRISTAUX LIQUIDES, DE PREFERENCE POUR VEHICULES A MOTEUR

(30) Priorität: 14.08.1986 DE 3627697
(43) Veröffentlichungstag der Anmeldung: 10.05.1989
(73) Patentinhaber: ROBERT BOSCH GMBH, 70442 Stuttgart (DE)
(72) Erfinder: FABRY, Ehrenfried, D-8500 Nürnberg 1 (DE); GODDARD, George, D-8508 Wendelstein (DE); MEYER, Dieter, D-8501 Feucht (DE)
(86) Internationale Anmeldenummer: DE8700154
(87) Internationale Veröffentlichungsnummer: WO8801399

(56) Entgegenhaltungen:
- EP-A- 94 316
- EP-A- 0 140 350
- DE-A- 2 160 611
- DE-A- 2 413 516
- DE-A- 2 820 896
- DE-A- 3 244 710
- DE-A- 3 301 914
- DE-A- 3 302 156
- DE-U- 8 510 864
- FR-U- 2 539 900
- GB-A- 2 061 587
- GB-A- 2 094 405
- US-A- 2 537 971

## Beschreibung

Die Erfindung geht aus von einem Anzeigegerät für Meßwerte, Störanzeigen auf mindestens einer Flüssigkristallzelle, vorzugsweise in Kraftfahrzeugen nach der Gattung des Hauptanspruchs.

Bei einem bekannten Anzeigegerät dieser Art werden Bereiche der Flüssigkristallzelle mit unterschiedlicher Farbgebung der Schriften und Symbole bzw. der anzuzeigenden Informationen durch Farbfolien erreicht, welche zwischen der Flüssigkristallzelle und einem dahinter angeordneten Transflektor eingesetzt werden, so daß sowohl bei hellem Umgebungslicht als auch bei Dunkelheit eine gute Farbgebung erreicht wird (Elektronik, 1983, Heft 19, S16). Bekannt ist ferner, bei Verwendung transmissiver LCDs in den Bereichen mit unterschiedlicher Farbgebung einen entsprechenden Farbaufdruck an der Rückseite der LCD anzubringen. Dies ist insbesondere bei Flüssigkristall-Großanzeigen in Kraftfahrzeugen dort erwünscht, wo Warn- oder Störanzeigen gegenüber anderen Anzeigen wie Uhrzeit, Geschwindigkeit, Motordrehzahl und dergleichen durch unterschiedliche Farbgebung herausgehoben werden sollen.

Bei den bekannten Lösungen ist es jedoch nachteilig, daß jeder Bereich der LCD mit nur einer ihm zugeordneten Farbgebung versehen werden kann. Werden bei verschiedenen Fahrzeugtypen jeweils andere Farbgebungen der verschiedenen Bereiche der LCD gewünscht, so ist es erforderlich, ein entsprechend großes Sortiment von Flüssigkristallzellen bereitzuhalten, was einen erheblichen Aufwand an Lagerhaltung erfordert. Nachteilig ist ferner, daß die durch Folien oder Farbdruck erzeugte unterschiedliche Farbgebung sich auch auf die nicht angesteuerten, gesperrten Bereiche der LCD auswirkt, so daß sich dort eine unerwünschte unterschiedliche Grundhelligkeit ergibt.

Im Dokument GB-A-2 061 587 ist ein mit einer transmissiven Flüssigkristallzelle versehenes Anzeigegerät beschrieben, dessen rückwärtige Beleuchtung aus einem einzigen Lichtschacht besteht, in dem mehrere Glühlampen von verschiedenen Farben gelagert sind.

Dokument EP-A-140 350 beschreibt ein mit einer transmissiven Flüssigkristallzelle versehenes Anzeigegerät, dessen verschiedene Anzeigerbereiche durch zugehörige lichtisolierte Lichtschächte beleuchtet sind.

Aus der DE 33 02 156 A1 ist eine Beleuchtungseinrichtung für eine transmissive Flüssigkristall-Anzeige bekannt, bei der die Flüssigkristallanzeige unterschiedlich farbig beleuchtet werden kann. Zur Farbumschaltung ist eine weitere Lampe schaltbar, deren Licht über einen lichtdurchlässigen Farbfilter auf die von einer weiteren Lampe beleuchtete Rückseite der Flüssigkristall-Anzeige fällt.

Mit der vorliegenden Erfindung wird angestrebt, eine unterschiedliche Farbgebung an verschiedenen Bereichen der LCD jederzeit frei wählen zu können, um dadurch bei geringer Lagerhaltung für die Wahl der Farbgebung vortig flexibel zu sein.

### Vorteile der Erfindung

Die erfindungsgemäße Ausbildung des Anzeigegerätes mit den kennzeichnenden Merkmalen des Hauptanspruchs hat den Vorteil, daß zwar die Bereiche der LCD mit unterschiedlicher Farbgebung durch die Ausbildung und Anordnung der verschiedenen Lichtschächte hinter der Flüssigkristallzelle festgelegt sind, daß jedoch die gewünschte Farbgebung erst mit den Einsetzen einer Lichtquelle mit der gewünschten Farbe in den einzelnen Lichtschächten erfolgt. Ein weiterer Vorteil besteht darin, daß hierbei durch bekannte Maßnahmen, wie beispielsweise die Anordnung von Streufolien und fluoreszierenden Scheiben, Rasterdruck und dergleichen eine gleichmäßige Grundhelligkeit in dengesperrten Bereichen der LCD möglich ist und daß eine gleichmäßige Transmission des Lichtes in den angesteuerten Bereichen der LCD erzielt wird, wobei der Übergang der Farben zwischen den Bereichen unterschiedlicher Farbgebung so weich ist, daß sich dadurch ein sehr gutes optisches Erscheinungsbild ergibt.

Durch die in den Unteransprüchen ausgeführten Maßnahmen sind vorteilhafte Weiterbildungen und Verbesserungen der im Hauptanspruch angegebenen Merkmale möglich. Besonders vorteilhaft ist es, in mindestens einem der Lichtschächte mehrere Lichtquellen von unterschiedlicher Farbe anzuordnen, die individuell einschaltbar sind. Damit kann in diesem Bereich der LCD die Farbgebung umgeschaltet werden, indem beispielsweise für die Grundhelligkeit eine Glühlampe mit weißem Licht vorgesehen wird, indem für Funktions- und Zustandsanzeigen eine grüne Lampe eingeschaltet wird, sofern die angezeigten Werte und Funktionen normal sind und indem schließlich bei der Anzeige von Störungen eine rote Lampe für diesen Bereich der LCD eingeschaltet wird, wobei beispielsweise die Störanzeige durch eine intermittierende Anzeige der gestörten Funktion auf der LCD kenntlich gemacht wird.

### Zeichnung

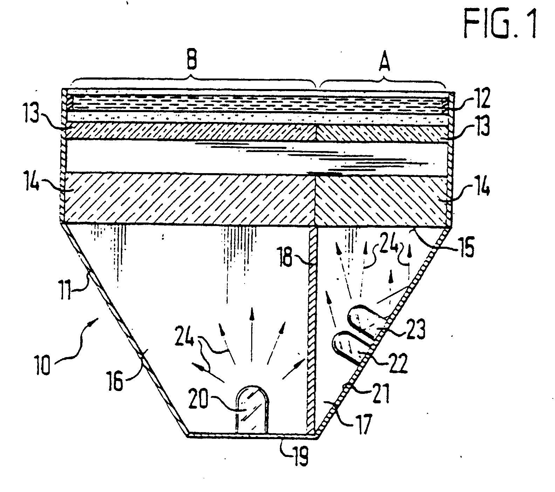

Ein Ausführungsbeispiel der Erfindung ist in der Zeichnung dargestellt und in der nachfolgenden Beschreibung näher erläutert. Es zeigt Figur 1 ein erfindungsgemäßes LCD-Anzeigegerät im Querschnitt mit zwei Bereichen unterschiedlicher Farbgebung und mehreren Lampen für einen dieser Bereiche.

### Beschreibung des Ausführungsbeispiels

In Figur 1 ist ein Anzeigegerät für ein Kraftfahrzeug für eine Flüssigkristall-Großanzeige mit 10 bezeichnet. Eine Gehäuseeinfassung 11 trägt vorn eine transmissive Flüssigkristallzelle 12 mit dem üblichen, bekannten Aufbau, wonach eine Flüssigkristallsubstanz zwischen zwei Elektroden aufweisende Glasplatten eingefüllt und abgedichtet ist. Die Flüssigkristallzelle 12 soll zwei nebeneinander liegende Bereiche A und B mit unterschiedlicher Farbgebung der Schriften, Symbole und Anzeigen aufweisen, wobei der rechte Bereich A zur Anzeige verschiedener Funktionen und Zustände dient die zu überwachen sind und welche über eine nicht dargestellte Elektronik ständig bzw. beim Auftreten von Störungen zur Anzeige gebracht werden. Der Bereich B dient zur Anzeige weiterer Daten, Skalen und dergleichen, die in entsprechender Weise von der Elektronik angesteuert wird. Hinter der Flüssigkristallzelle 12 sind z.B. gelb, orange oder rot eingefärbte Streufolien 13 angeordnet, die jeweils einen Bereich A bzw. B unterschiedlicher Farbgebung abdecken und aneinander angrenzen. Dahinter sind mit geringem Abstand für die Bereiche A und B jeweils fluoreszierende Scheiben 14 angeordnet, die ebenfalls z.B. geio, orange oder rot eingefärbt sind und aneinander angrenzen. An der Rückseite der rechten Scheibe 14 ist in an sich bekannter Weise ein Rasterdruck 15 aus einem lichtundurchlässigen Material aufgebracht, welcher zu einer gleichmäßigen Ausleuchtung der Flüssigkristallzelle 12 innerhalb des Bereiches A durch punktförmige Lichtquellen dient. Hinter den Scheiben 14 sind den Bereichen A und B der Flüssigkristallzelle 12 zugeordnete Lichtschächte 16 und 17 angeordnet, die im wesentlichen durch die Gehäuseeinfassung 11 gebildet werden und durch eine Trennwand 18 voneinander räumlich abgetrennt sind. Am Boden 19 des linken Lichtschachtes 16 ist als Lichtquelle eine Glühlampe 20 mit weißem Licht eingesetzt, die sowohl für die Grundhelligkeit im Bereich B der Flüssigkristallzelle 12 als auch für die Ausleuchtung der angesteuerten Bereiche, z. B. Linear- oder Rundskalen dient. Im rechten Lichtschacht 17 sind auf einer als Reflektor 21 ausgebildeten Seitenwand eine erste Glühlampe 22 mit weißem Licht und daneben eine zweite Glühlampe 23 mit rotem Licht angeordnet. Die Glühlampen 22 und 23 sind getrennt voneinander einschaltbar. Die weiße Glühlampe 22 wird dabei für die Grundhelligkeit ständig eingeschaltet, wogegen die rote Glühlampe 23 wahlweise je nach Schaltung der Elektronik für die Anzeige von Störungen bzw. für Funktions- und Zustandsanzeigen zugeschaltet wird. Durch die Pfeile 24 soll die Richtung des von den Glühlampen 20, 22 und 23 ausgehenden Lichtes angedeutet werden.

Daraus kann man erkennen, daß ein Teil des Lichtes im rechten Lichtschacht 17 von den Glühlampen 22, 23 auf den Reflektor 21 fällt und von dort zum Bereich A der Flüssigkristallzelle 12 hin reflektiert wird.

Neben der roten Glühlampe 22 kann noch eine weitere, beispielsweise grüne Glühlampe im Lichtschacht 17 angeordnet werden, welche zusammen mit der weißen Glühlampe 23 oder allein immer dann eingeschaltet ist, wenn die anzuzeigenden Werte im Bereich A der Flüssigkristallzelle 12 innerhalb der zulässigen Grenzen liegen. Beim Auftreten von Fehlern oder Störungen wird dagegen auf die rote Glühlampe 23 umgeschaltet. Um zu verhindern, daß das farbige Licht der Glühlampe 23 für den Bereich A der Flüssigkristallzelle 12 zum Bereich B gelangen kann, muß die Lichtquelle vom Bereich B der Flüssigkristallzelle 12 für die weiße Farbgebung durch die Trennwand 18 abgeschirmt sein. Außerdem wird eine Lichteinkopplung vom Bereich A zum Bereich B über die Streufolien 13 und fluoreszierenden Scheiben 14 dadurch verhindert, daß diese jeweils nur ihrem Bereich zugeordnet sind, anstelle einer durchgehenden, die ganze Flüssigkristallzelle 12 abdeckenden Streufolie bzw. einer durchgehenden fluoreszierenden Scheibe. Dadurch, daß die Streufolien 13 und die fluoreszierenden Scheiben 14 für die beiden Bereiche A und B der Flüssigkristallzelle 12 aneinander angrenzen, wird ein weicher Farbübergang und eine gleichmäßige Grundhelligkeit für die Flüssigkristallzelle 12 erreicht.

Die Erfindung ist nicht auf das dargestellte Ausführungsbeispiel beschränkt, da die konstruktive Ausgestaltung und Anordnung der verschiedenen Teile im Rahmen der Erfindung geändert werden können.

## Patentansprüche

1. Anzeigegerät für Meßwert-, Funktions-, Zustands- oder Störanzeigen vorwiegend in Kraftfahrzeugen, mit:
a) einer transmissiven Flüssigkristallzelle (12), die eine Mehrzahl von Bereichen (A, B) mit jeweils unterschiedlichen hell- und dunkelsteuerbaren Anzeigeteilen aufweist, wie Schriften, Symbole bzw. Anzeigen;
b) einer Beleuchtungsvorrichtung mit Lichtquellen (20, 22, 23) zur Erzeugung von Licht unterschiedlicher Farbe, die die Bereiche der Flüssigkristallzelle mit jeweils unterschiedlicher Farbgebung von der dem Betrachter abgewandten Seite her ausleuchten;
c) wobei die Beleuchtungsvorrichtung derart ausgestaltet ist, daß in Betrieb mindestens eine der Lichtquellen (20, 22) ständig eingeschaltet ist;
dadurch gekennzeichnet,
d) daß an der dem Betrachter abgewandten Seite der Flüssigkristallzelle (12) Lichtschächte (16, 17) vorgesehen sind, in die zur Beleuchtung der Bereiche (A, B) mit unterschiedlicher Farbgebung jeweils die Lichtquellen unterschiedlicher Farbe der Beleuchtungsvorrichtung angeordnet sind;
e) daß die Lichtschächte durch eine Trennwand (18) voneinander getrennt sind, so daß das farbige Licht der einen Lichtquelle (23) von dem für eine andere Farbgebung bestimmten Bereich (B) der Flüssigkristallzelle abgeschirmt ist;
f) daß die ständig eingeschalteten Lichtquellen so angeordnet sind, daß ihr Licht so verteilt ist, daß sich über alle Bereiche eine gleichmäßige Grundhelligkeit der dunkelgesteuerten Anzeigeteile ergibt;
g) und daß an der dem Betrachter abgewandten Seite der Flüssigkristallzelle (12) eingefärbte Streufolien (13), dahinter fluoreszierende Scheiben (14) und dahinter die durch die Trennwand (18) voneinander getrennten Lichtschächte (16, 17) angeordnet sind, wobei die Streufolien (13) und fluoreszierenden Scheiben (14) aneinander angrenzend jeweils einen Bereich (A, B) unterschiedlicher Farbgebung der Flüssigkristallzelle (12) abdecken.

2. Anzeigegerät nach Anspruch 1, dadurch gekennzeichnet, daß in mindestens einem der Lichtschächte (16, 17) mehrere Lichtquellen (22, 23) von unterschiedlicher Farbe angeordnet und getrennt voneinander einschaltbar sind.

3. Anzgeigergerät nach Anspruch 1 oder 2, dadurch gekennzeichnet, daß mindestens einer der Lichtschächte (16, 17) mit einem Reflektor (21) versehen ist, der für die gleichmäßige Grundhelligkeit der Flüssigkristallzelle (12) einen Teil des Lichtes der Lichtquelle (22, 23) zu dem ihm zugeordneten Bereich (A) der Flüssigkristallzelle (12) hin reflektiert.

4. Anzeigegerät nach Anspruch 1, dadurch gekennzeichnet, daß für die gleichmäßige Grundhelligkeit der Flüssigkristallzelle (12) in jedem Lichtschacht (16, 17) eine bei Betrieb ständig eingeschaltete, Lichtquelle (20, 22) angeordnet ist.

## Claims

1. Display apparatus for measured value displays, function displays, status displays or fault displays, predominantly in motor vehicles, having:
a) a transmissive liquid crystal cell (12) which has a multiplicity of areas (A, B) with, in each case, different display parts which can be made bright and dark, such parts being lettering, symbols or displays;
b) an illumination device having light sources (20, 22, 23) for producing light of different colours, which illuminate the areas of the liquid crystal cell with, in each case, different colouring, from the side turned away from the viewer;
c) the illumination device being designed in such a way that when it is in operation at least one of the light sources (20, 22) is continuously switched on;
characterized
d) in that on the side of the liquid crystal cell (12) turned away from the viewer, light wells (16, 17) are provided, in which, in order to illuminate the areas (A, B) with different colouring, in each case the light sources with different colours of the illumination device are arranged;
e) in that the light wells are separated from one another by a separating wall (18), in such a way that the coloured light of the one light source (23) is screened from the area (B) of the liquid crystal cell which is intended for a different colouring;
f) in that the continuously switched-on light sources are arranged in such a way that their light is distributed in such a way that a uniform background brightness of the darkened display parts results over all areas;
g) and in that on the side of the liquid crystal cell (12) turned away from the viewer, coloured diffusion films (13) are arranged, behind the latter fluorescent plates (14) are arranged and behind those the light wells (16, 17) which are separated from one another by the separating wall (18) are arranged, the diffusion films (13) and fluorescent plates (14) covering, adjacent to one another, in each case an area (A, B) of different colouring of the liquid crystal cell (12).

2. Display apparatus according to Claim 1, characterized in that a multiplicity of light sources (22, 23) of different colours are arranged in at least one of the light wells (16, 17), and can be switched on separately from one another.

3. Display apparatus according to Claim 1 or 2, characterized in that at least one of the light wells (16, 17) is provided with a reflector (21) which, for the uniform background brightness of the liquid crystal cell (12), reflects a portion of the light of the light source (22, 23) to the area (A) assigned thereto of the liquid crystal cell (12).

4. Display apparatus according to Claim 1, characterized in that, for the uniform background brightness of the liquid crystal cell (12), a light source (20, 22) which is continuously switched on during operation is arranged in each light well (16, 17).

5. Display apparatus according to Claim 1, characterized in that the separating wall of the adjacent light wells (16, 17) extends as far as the rear of the fluorescent plates (14).

## Revendications

1. Appareil d'affichage pour les grandeurs de mesure, les fonctions, les états et les incidents, de préférence dans des véhicules automobiles, avec :
a) une cellule à cristaux liquides fonctionnant par transmission (12), qui comprend un grand nombre de zones (A, B) ayant des parties d'affichage différentes pouvant être commandées en clair ou en foncé, comme des inscriptions, symboles ou affichages ;
b) un dispositif d'éclairage avec des sources de lumière (20, 22, 23) pour créer de la lumière de couleur différente, qui illumine les zones des cellules à cristaux liquides du côté opposé à l'observateur, avec une coloration respectivement différente,
c) le dispositif d'éclairage étant réalisé de manière qu'en fonctionnement au moins une des sources de lumière (20, 22) est enclenchée en continu,
caractérisé en ce que
d) sur le côté des cellules à cristaux liquides (12) opposé à l'observateur, sont prévus des puits de lumière (16, 17), dans lesquels sont disposées, pour l'éclairage des zones (A et B) avec une coloration différente, respectivement les sources de lumière de couleur différente du dispositif d'éclairage ;
e) les puits de lumière sont séparés l'un de l'autre par une paroi (18), de sorte que la lumière colorée de l'une des sources de lumière (23) est protégée de la zone (B) déterminée pour une autre coloration de la cellule à cristaux liquides ;
f) les sources lumineuses insérées de manière continue sont disposées, de façon que leur lumière soit répartie, pour qu'il en résulte sur toutes les zones, une clarté de base régulière des parties d'affichage commandées avec une éclairage atténué ; et
g) du côté de la cellule à cristaux liquides (12) opposé à l'observateur sont disposées des feuilles de dispersion colorées (13), derrière celles-ci des plaques fluorescentes (14) et derrière celles-ci les puits de lumière (16, 17) séparés l'un de l'autre par la cloison (18), les feuilles de dispersion (13) et les plaques phosphorescentes (14) étant adjacentes et recouvrant respectivement une zone (A, B) de coloration différente de la cellule à cristaux liquides (12).

2. Appareil d'affichage selon la revendication 1,
caractérisé en ce que
dans au moins l'un des puits de lumière (16, 17), on a plusieurs sources lumineuses (22, 23) de couleurs différentes et qui peuvent être mises en oeuvre séparément.

3. Appareil d'affichage selon la revendication 1 ou 2,
caractérisé en ce qu'
au moins l'un des puits de lumière (16, 17) est muni d'un réflecteur (21) qui, pour assurer un éclairage de base régulier de la cellule à cristaux liquides (12) réfléchit une partie de la lumière de la source lumineuse (22, 23) vers la zone correspondante (A) de la cellule à cristaux liquides (12).

4. Appareil d'affichage selon la revendication 1,
caractérisé en ce que
pour l'éclairage de base, régulier de la cellule à cristaux liquides (12), chaque puits de lumière (16, 17) comporte une source de lumière (20, 22) branchée en permanence pendant le fonctionnement.

5. Appareil d'affichage selon la revendication 1,
caractérisé en ce que
la cloison des puits de lumière (16, 17) juxtaposés arrive jusque sur la face arrière des plaques fluorescentes (14).
